# EUROPEAN PATENT SPECIFICATION

(11) **EP 2 998 605 B1**
(45) Date of publication and mention of the grant of the patent: **06.11.2019**
(21) Application number: 14185636.9
(22) Date of filing: 19.09.2014
(51) Int. Cl.: F16D 48/06

(54) **Method for controlling a clutch**
Verfahren zum Ansteuern einer Kupplung
Procédé de commande d'un embrayage

(43) Date of publication of application: 23.03.2016
(73) Proprietor: KNORR-BREMSE Systeme für Nutzfahrzeuge GmbH, 80809 München (DE)
(72) Inventor: Trencseni, Balazs, 1037 Budapest (HU); Balogh, Levente, 2310 Szigetszentmiklos (HU); Nemeth, Huba, 1116 Budapest (HU); Szimandl, Barna, 2038 Sóskút (HU)

(56) References cited:
- EP-A2- 2 177 781
- DE-A1-102006 011 350
- DE-A1-102011 011 152
- DE-A1-102012 218 227

## Description

The present invention relates to a method for controlling a clutch and, in particular, to a method of a clutch control to reduce a clutch actuation time.

### Background

The clutch controls the transmitted torque in the vehicle driveline system. Either the driver or an automated vehicle subsystem, especially a transmission controller, may control the clutch by an actuator module. In vehicles equipped with a traditional manual transmission, the driver mostly operates the clutch over a pedal using occasionally servo assistance. On the other hand, in commercial vehicles automated mechanical transmissions are already used widely, wherein the disengagement and an appropriate engagement of the driveline is executed mostly by an actuator module which is typically electronically controlled.

As for the electronically controlled clutch, a reference signal indicates the desired operation (demand). This is independent from the source of the demand, whether it comes from the driver or an automated vehicle subsystem. The clutch control ideally controls the clutch actuator so that the demanded transferable torque follows the reference signal. Available clutches may also comprise more than one actuator.

The actuator provides an actuation force causing a mechanical displacement in the clutch corresponding to the engaging and disengaging. In particular, the transferable torque and the actuator force (or other degree of intervention) in the clutch depend on a relative displacement (position) of clutch components (e.g. clutch discs). For example, the clutch may be fully engaged if no actuator force is present and increasingly disengages with an increasing actuator force. It is understood that several different control methods can be distinguished to control a vehicle clutch.

As a consequence of internal friction clutches show a hysteresis so that the sequence of disengagement and engagement follows a hysteresis loop. The hysteresis loop results in a time delay so that an engaging following a disengaging cannot be carried out immediately. This has the disadvantage that the clutch cannot react immediately upon a respective demand signal (to engage or to disengage). In addition, in a disengaged state, the actuator may provide a level of the actuator force, which is not needed for the particular state resulting in an unnecessary load or stress that may deteriorate the clutch over the time.

DE 10 2012 218 227 A1 discloses a conventional method for controlling a friction coupling between a drive unit and a gearbox of a vehicle dependent on a predicted time to the next gear shift.

Therefore, there is a demand for a reduction in a clutch actuation time and thus for an improvement of the clutch reaction time.

### Summary of the Invention

The present invention solves the afore-mentioned problem by providing a method for controlling a clutch according to claim 1, a clutch controller according to claim 13 and a commercial vehicle according to claim 15. The dependent claims refer to specifically advantageous realizations of the subject matters of the independent claims.

The present invention relates to a method for controlling a clutch. The clutch comprises an actuator to control a transferable torque over a driveline system of a vehicle. The actuator is controllable to cause a disengagement process and an engagement process of the clutch while passing a hysteresis. The method comprises: predicting a transition between the disengagement process and the engagement process; and compensating the hysteresis by controlling the actuator without performing the transition.

Therefore, the present invention solves the above-mentioned problem by compensating the hysteresis at a moment when a transition between an engagement process and a disengagement process is predicted. This compensation of the hysteresis results in a modified working point, which is closer to the subsequent engagement or disengagement of the clutch. Hence, the response time of the clutch is shortened and an applied actuator force might be lowered.

It is understood that an engagement process relates to any clutch process within which the transmitted torque from an engine to a transmission is increased, whereas a disengagement process relates to any clutch activity, in which the transmitted torque decreas es. It is further understood that the engagement process does not necessarily relate to a full engagement of the clutch - any partial engagement and gradually increasing transferable torque should be understood as an engagement process. The same applies to the disengagement process which should cover any process, within which the transmitted torque decreases - whether it results in a full disengagement or not. In other words, when the transferable torque from the engine to the transmission is considered as function of time, the transition refers to any maximum or minimum of the transferrable torque. In addition, it is understood that the transition refers to both directions, i.e. from an engagement to a disengagement or from a disengagement to an engagement.

In addition, the term "controlling the actuator" refers to any actuation of the actuator which results into a change in the transferrable torque. In particular, by controlling the actuator a displacement of clutch components are changed which result in a modified transferrable torque. For a pneumatically controlled clutch, the actuator may simply be controlled by controlling respective valves (to open or to close them).

The displacement may, for example, relate to displacements of one or more clutch discs that are pressed onto each other by a spring in the engaged process, whereas in the disengagement process the actuator force overcomes the spring force to displace the two or more clutch discs.

Therefore, in further embodiments the clutch is configured to control the transferable torque by controlling a displacement of at least one clutch component and the actuator is configured to provide an actuator force causing the displacement of the at least one clutch component, wherein, if the displacement exceeds a predetermined level, the disengagement is achieved and, if the displacement is lower than the predetermined level, the clutch is at least partly engaged. The step of compensating the hysteresis may be performed by changing the actuator force without passing the predetermined level in the displacement.

In further embodiments the current values of the actuator force and the displacement define a current working point and the step of compensating the hysteresis may include the modification of the current working point. The actuator may be controlled such that in the modified working point: the time period to achieve the transition is shortened and/or an actuator load is reduced and/or an actuator stroke is reduced.

It is understood that a modification of the working point may also include an optimized working point. An optimized working point may relate to a working point which provides a shorter time for making the transition. The working point is defined by an actuator state providing a working point actuation force and a working point actuation displacement (corresponding to a working point transferrable torque).

It is further understood that in the region where no torque is transmitted the displacement may be changed without modifying the transferable torque (which is zero in this region) and thus without initiating the transition.

In yet another embodiment the method further comprises the step of controlling the actuator in accordance to an external request (e.g. from a driver or an automated transmission controller) through an assigned characteristic. Herein the assigned characteristic may ensure that the engaging process (or disengaging process) is carried out using a certain profile and not instantaneously. This may be of advantage, because an instantaneous engagement of the clutch may result in a stalling of the engine. On the other hand, when the vehicle performs a gear shift, the clutch may engage or disengage very quickly in order to carry out the gear shift within a short period of time. Therefore, dependent on the particular situation, different assigned characteristics can be used in order to perform the engagement/disengagement processes.

The step of predicting a transition between the engagement process and the disengagement process (in either direction) can be carried out in many different ways. One clear indication of a transition can be taken from the current state of the vehicle, whether it is moving or not moving or whether the driver intends to make a gear shift (or when an automatic transmission controller performs a gear shift). For example, during starting the vehicle, the clutch operations may be monitored and recorded so that from subsequent clutch operations the clutch controller is able to make a prediction of the next clutch operation. Furthermore, if the transmitted torque constantly increases it is likely that this increase of the transferrable torque will continue. On the other hand, if the transferred torque slows down, it may be an indication that a subsequent disengagement is intended.

Therefore, according to further embodiments, the step of predicting a transition may be carried out based on a vehicle status and/or statuses of driver operators and the method may comprise the steps of evaluating the vehicle status and/or evaluating the statuses of driver operators. The evaluation may be based on a current vehicle status and/or a previous vehicle status and/or current statuses of driver operators and/or previous statuses of driver operators. The vehicle status may include at least one of the following: a moving vehicle during a gear shift, a parking vehicle, a starting vehicle. The statuses of the driver operators may include at least one of the following: a position of a clutch pedal, a position of an acceleration pedal, a position of a breaking pedal, a position of a selector for an automatic transmission.

In yet another embodiment the step of compensating the hysteresis is carried out such that the transferrable torque remains at a same level.

In yet another embodiment the clutch may be operated by changing an actual position of the at least one clutch component in response to a received demand position, wherein the actual position is controlled by the actuator. The demand position may be received by the driver or a controller of an automatic transmission or any other control unit. The method may further comprise the step of reading the demand position and the actual position, for example, before the steps of predicting a transition and compensating the hysteresis are carried out. The actual position may be determined by feedback information provided by the clutch.

In further embodiments the method may comprise the optional steps: comparing the demand position with a maximum clutch position, and, if the demand position is greater than the maximum clutch position, limiting the demand position to the maximum clutch position. After these steps, the steps of predicting a transition and compensating the hysteresis may be carried out.

In yet another embodiment the method may include a step of comparing the actual position with a tolerance range of the demand position, if the demand position is smaller or equal to or has been limited to the maximum clutch position. And, if the actual position is outside the tolerance range, the step of controlling the valves of the actuator to modify the actual position and to achieve the demand position may be included. The tolerance range may be a predetermined value, which depends on the particular clutch or vehicle and take into account normal system fluctuations. Finally, the step of returning to the step of reading the demand position and the actual position may be carried out.

In yet another embodiment the method may perform the steps of predicting the transition and compensating the hysteresis, if the actual position is inside the tolerance range. At the end the method may return to the step of reading the demand position and the actual position, which may have changed in the meantime.

Further embodiments relate also to a clutch controller for a clutch with an actuator to control a transferable torque over a driveline system of a vehicle. The actuator is controllable to cause a disengagement process and an engagement process of the clutch, while passing a hysteresis. The clutch controller comprising: means for predicting a transition between the disengagement process and the engagement process and means for compensating the hysteresis by controlling the actuator without performing the transition. These means may be implemented in the clutch controller, for example, as software modules, which are configured to perform the corresponding functions.

Furthermore, the clutch may, for example, be controlled by one or more valves acting as an actuator such that, when the valve is open, a pressure providing the actuator force is supplied to the clutch. On the other hand, when the valve is exhausted, the pressure is lowered in the clutch such that the clutch can engage (as a consequence of the spring). In further embodiments, the clutch can also be controlled electromechanically by an electromagnetic force or pneumatically or hydraulically.

Therefore, in further embodiments the means for compensating are configured to control the clutch pneumatically or hydraulically or electromechanically.

The present invention relates also to a vehicle with a clutch and a clutch controller as described before, wherein the clutch controller is configured to perform, during operation, the inventive method.

This method may also be implemented in software or a computer program product. Therefore, embodiments relate also to a computer program having a program code for performing the described method, when the computer program is executed on a processor (e.g. inside the clutch controller). It is understood that the order of steps in the described methods may also differ.

### Brief Description of the Drawings

Various embodiments of the present invention will be described in the following by way of examples only, and with respect to the accompanying drawings, in which:
- Fig. 1: depicts a flowchart of a method according to an embodiment of the present invention;
- Fig. 2: depicts a clutch control system implementing the inventive method;
- Fig. 3: depicts the hysteresis loop for the clutch system;
- Fig. 4: depicts the dependency of the transferrable torque as a function of the actuator displacement position;
- Fig. 5: depicts a characteristic of an engagement/disengagement process over the time; and
- Fig. 6: depicts further optional method steps according to further embodiments of the present invention.

### Detailed Description

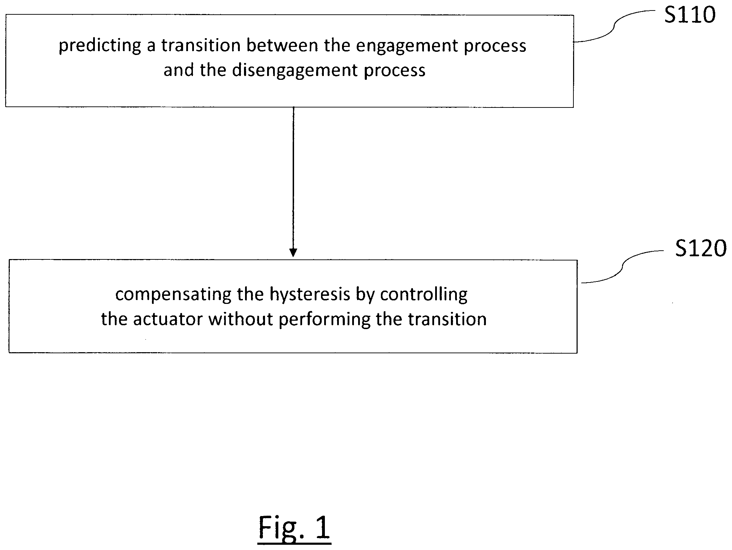

Fig. 1 depicts a flowchart of a method for the controlling the clutch 10 according to an embodiment of the present invention. The clutch 10 comprises an actuator to control a transferable torque over a driveline system of a vehicle, wherein the actuator is controllable to cause a disengagement process and an engagement process of the clutch 10 while passing a hysteresis. The method comprises: predicting S110 a transition between the disengagement process and the engagement process, and compensating S120 the hysteresis by controlling the actuator without performing the transition.

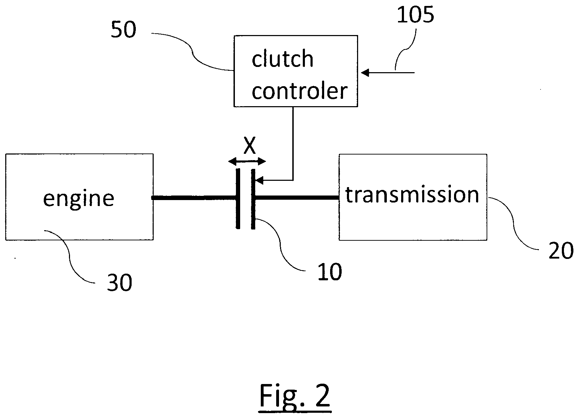

Fig. 2 depicts a corresponding clutch system comprising a clutch 10 disposed between an engine 30 and a transmission 20 (which may be a manual transmission or an automatic transmission). The clutch 10 is configured to transfer a torque provided by the engine 30 to the transmission 20. The transferrable torque depends on a displacement position X of one or more clutch components, which is controlled by one or more actuator(s). The clutch 10 may, for example, comprise a cylinder with a piston that is movable in the cylinder in response to an applied actuator force to define the displacement X.

The actuator is controlled by a clutch controller 50 based on input information received over an input line 105. The input line 105 may be coupled to a communication bus of the vehicle or may be any other kind of control line to control the clutch controller 50. The clutch controller 50 may be configured to carry out the method steps as depicted in Fig. 1.

For example, a position of clutch pedal (actuated by a driver) or a position of an automatic transmission controller may be provided the clutch controller 50 via the further control lines 105. The actuator 40 may be controlled mechanically, hydraulically, pneumatically or electromagnetically. For example, one or more valves may be configured to provide a pressure to move an actuator piston. As result, the displacement position X is changed in the clutch 10 and therewith the transferrable torque from the engine 30 to the transmission 20 is modified.

Optionally, the actuator may comprise a first valve providing a pressure from a pressure source in the vehicle (not shown in Fig. 2) to the clutch 10, wherein the supplied pressure is sufficient to modify the displacement X in order to change the transferrable torque. In addition, the actuator 40 may comprise a second valve which is suitable to exhaust the supplied pressure to the clutch 10, thereby achieving the engagement process of the clutch 10. Furthermore, the clutch 10 may comprise a spring which is configured to provide a bias force which engages the clutch 10 whenever the actuator 40 does not provide any pressure to disengage the clutch 10.

With the compensation of the hysteresis appearing in the whole clutch system after reaching a given target state a faster reaction of the actuation is made possible if the foregoing motion direction deviates from a subsequent motion, e.g. after staying still in the target state (the mentioned transition).

Although the description refers mainly to an electronically controlled pneumatic clutch actuator, it is not limited thereto. In addition, to make the underlying effect more apparent the friction inside the clutch actuator is emphasized and the friction of other linked elements (e.g. inside the clutch mechanism) that are less relevant is neglected. However, the described method may be applied also to situations, where the neglected elements become more relevant. Therefore, also for these more general cases the total hysteresis of the respective actuators inside the vehicle clutch mechanism can be managed independently from the source of the specified effect.

The fluid mass flow from and to the cylinder of the clutch 10 can be controlled by electronically driven valves. At least one valve is used to fill (from the supply) and at least one is used to exhaust (to the ambient) the working cylinder. The given clutch position can be kept if no valve is driven, i.e. there is a zero fluid mass flow from and to the working cylinder.

The present invention solves the above-mentioned problem that the start of the engagement of a disengaged clutch 10 can be achieved without delay, which would increase the time needed for full clutch engagement. If the clutch 10 is fully disengaged, the pressure inside the cylinder is high. At the beginning of the engagement process the hysteresis has to be compensated. This needs time depending on the amount of hysteresis (i.e. depending on the friction conditions) and the available mass flow of the fluid.

During the hysteresis compensation the actuator piston does not move - only the pressure of the fluid changes inside the actuator cylinder. Hence, during this process the clutch 10 cannot modify the transferable torque. In addition, if the hysteresis is stronger, the piston remains longer time in the disengaged position until the engagement (e.g. by exhausting) is finally achieved. Also during actuation in opposite direction, a similar effect occurs.

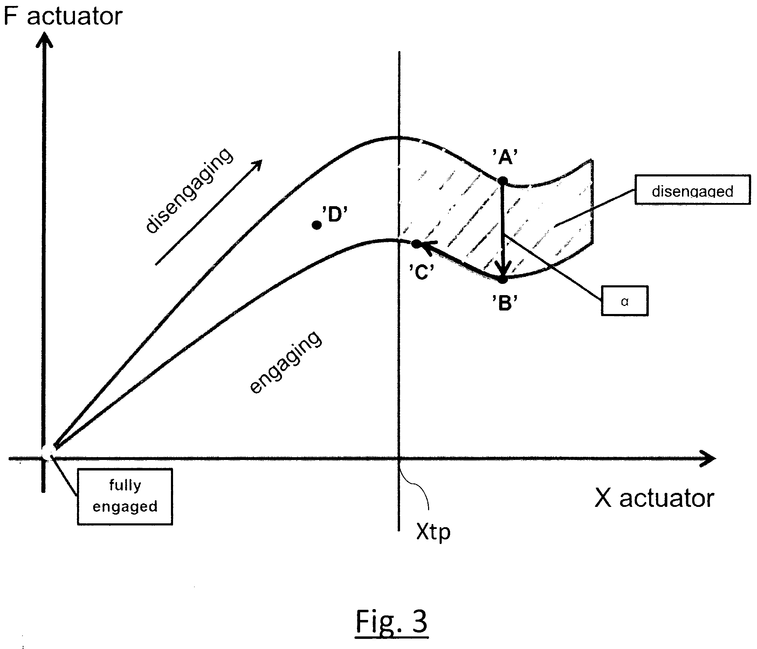

This effect can be made more apparent by referring to Fig. 3, where the hysteresis loop with respect to the actuator force F and the actuator position X is shown. Whenever the actuator 40 does not provide any actuator force F the clutch 10 is fully engaged (at the coordinate origin in Fig. 3). If the clutch controller 50 receives, for example, a disengagement demand (for example from the driver or an automatic transmission controller) the actuator force F increases and as a consequence, also the displacement X increases. The increase of the actuator force F continues until a maximum is reached. At the maximum of the actuator force the displacement X coincides with the touch point Xtp, where a decoupling of the engine 30 from the transmission 20 is achieved and torque is no longer transferred to the transmission 20. When this point is reached, the actuator force F slightly decreases until, for example, a working point A is reached. Subsequently, the actuator force F may or may not be increased further, but this has no influence on the transferrable torque because beyond the touch point Xtp no further torque is transmitted.

If the driver intends now to engage the clutch 10, the actuator force F is decreased (for example by exhausting respective valves). This decrease of the actuator force F will first not yield to a decrease in the displacement X. Instead, at the beginning the working point A goes over to the working point B, where the actuator force F is decreased, but the displacement X has not changed. This behavior is a consequence of the friction in the system, because to move the clutch actuator(s) the actuator force F has to be sufficiently lowered in order to start the movement. If the actuator force F is further lowered, the working point moves from working point B to working point C and subsequently goes over into the engagement process starting at the touch point Xtp. From this moment the transferrable torque increases until the fully engaged point at the coordinate origin is again reached.

The shadowed region on the right-hand side of the touch point Xtp represents working points of disengagement whereas all points for X<Xtp inside the curves of disengagement and engagement correspond to the working point with at least partly engaged clutch 10.

All other working point along the line 'α' may be reached by corresponding actuations. It may be of some benefit to select the modified working point not at C, i.e. not only the edge values on the hysteresis curves, but to select for hysteresis compensation a working point along the line 'α'.

The compensation of the hysteresis is performed such that, when the system is at the working point A, the actuator force F is slightly decreased, thereby the working point is moved to working point B or working point C. As a consequence, if the engaging process starts, the clutch 10 can engage within a shorter time period when compared to the working point A, from where the clutch 10 would have to go first to working point B and subsequently to working point C.

The same applies for the case, when the hysteresis shall be compensated not in the disengaged region (shadowed region on the right-hand side of the touch point X0), but in the partly engaged region on the left-hand side of the touch point Xtp. For example, if the driver does not wish to disengage completely the clutch 10 but to only partly disengage the clutch 10, the working point can be selected along any point of the curve from the coordinate origin to the touch point Xtp (on the disengagement curve). In this case the compensation of the hysteresis can be carried out such that the working point moves inside the hysteresis loop, for example to point D. Again, this is achieved by modifying the actuator force F (e.g. by the valves) slightly so that the engaging process is not yet started, but only the working point has moved from the disengaging path towards the engaging path (or vice-versa).

The same applies also to the case where the driver does not wish to fully engage the clutch 10, but starts the vehicle with only partly engaged clutch 10 followed by a further disengagement of the clutch 10. Again, the working point can be selected to be the working point D arranged between the engagement path and the disengagement path by actuating the actuator correspondingly (in this case to increase slightly the actuator force F).

Therefore, the compensation of the hysteresis is achieved by performing a well-defined or predetermined operation on the actuator (for example to open or close respective valves for a predetermined time).

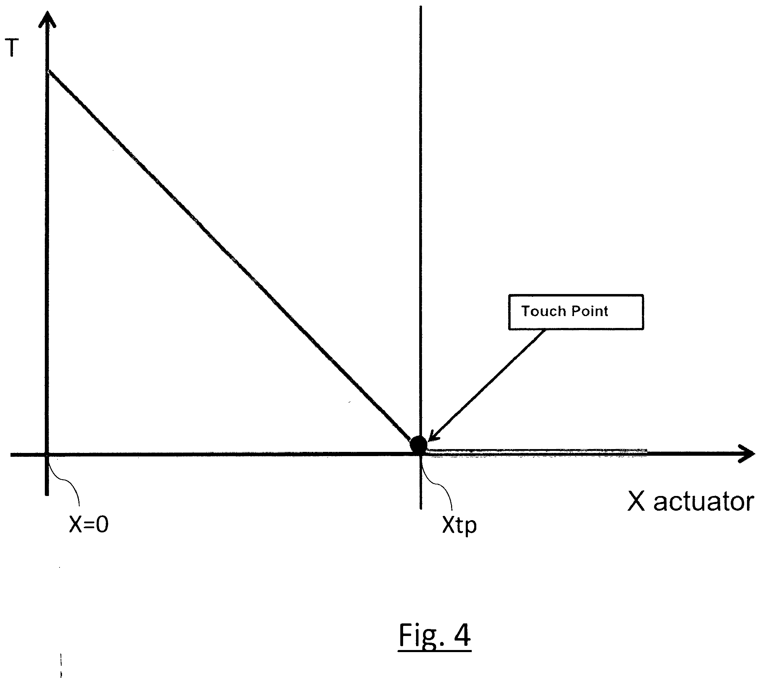

Fig. 4 depicts the dependence of the transferrable torque T as function of the displacement X. Again, the fully engaged state corresponds to a displacement X = 0 (at the coordinate origin), where the transferrable torque T is maximal. Now with increasing displacement the transferrable torque T decreases until the touch point Xtp is reached, where the transferrable torque T is zero and remains zero for any further displacement X. The depicted linear decrease of the transferrable torque T represents only an example. In further embodiments, the dependence of the transferrable torque T from the displacement X may be any function which decreases from the fully engaged state at X = 0 to the touch point Xtp.

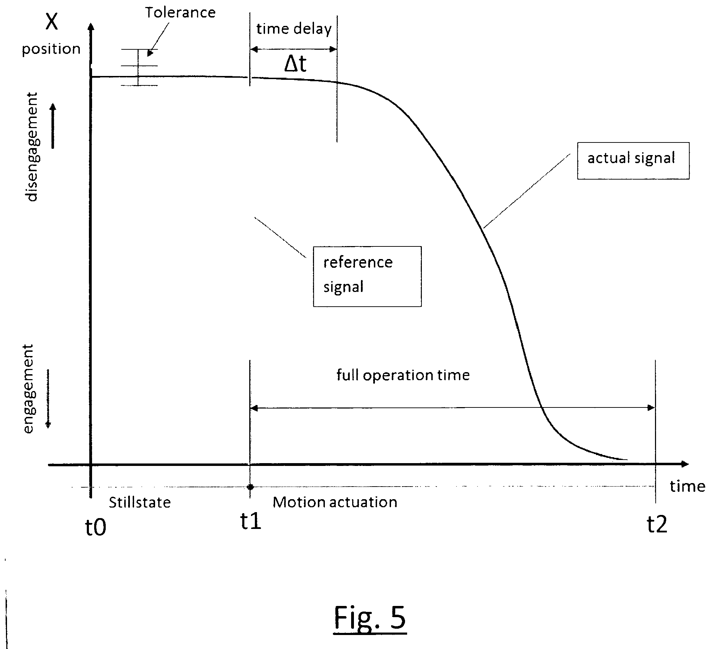

Fig. 5 depicts a clutch engagement process over the time, i.e. from a full disengagement at t = t0 to a full engagement at t = t2. At time t0 the clutch 10 is disengaged which relates to a position where the displacement X is larger than Xtp. From the time t0 to time t1 the clutch 10 remains disengaged (e.g. the vehicle does not move). Starting form time t1 (optionally after an indicated time delay Δt) the clutch 10 starts the engagement process until time t2, where a full engagement of the clutch 10 is provided.

The intention to engage the clutch 10 is signaled by the reference signal (demand position), which indicates between the time t0 and t1 a value for the position X indicating a complete disengagement. At the time t1 the reference signal switches to indicate a full engagement. However, since an instantaneous engagement is not preferred (e.g. the engine may stall), an actual signal (assigned characteristic) is controlled to deviate from the reference signal. In particular, after the defined time delay Δt, the actual signal decreases slowly until it reaches the full engagement signal at time t2. The concrete form of the actual signal may depend on various parameters, as for example the engine, the vehicle or also the operational state of the vehicle (e.g. moving or not moving).

The full operation time between the first time t1 and the second time t2 and the time delay Δt can be selected freely to meet desired specifications.

The demand position (reference signal) may be adjusted to be lower or equal to a maximum possible clutch position (a maximum possible displacement X). The actual position is controlled to be within the tolerance region relative to the reference signal. If the actual position is not within the tolerance region, the actuator will be controlled correspondingly to achieve that the actual position is close to the reference signal or within the tolerance region as long as the reference position is greater than the maximal possible clutch position.

Therefore, as shown in Fig. 5, the control of clutch actuator follows the reference signal with a given dynamics. When the reference signal changes compared to actual signal, the actuator can follow the reference signal only with delay. The delay can be explained partly by the hysteresis inside the clutch system. The hysteresis can be measured among others in the actuator force F over the actuator position, as it can be already seen in Fig. 3. Smaller delay means faster reaction on the control reference signal that may provide further benefits for the user.

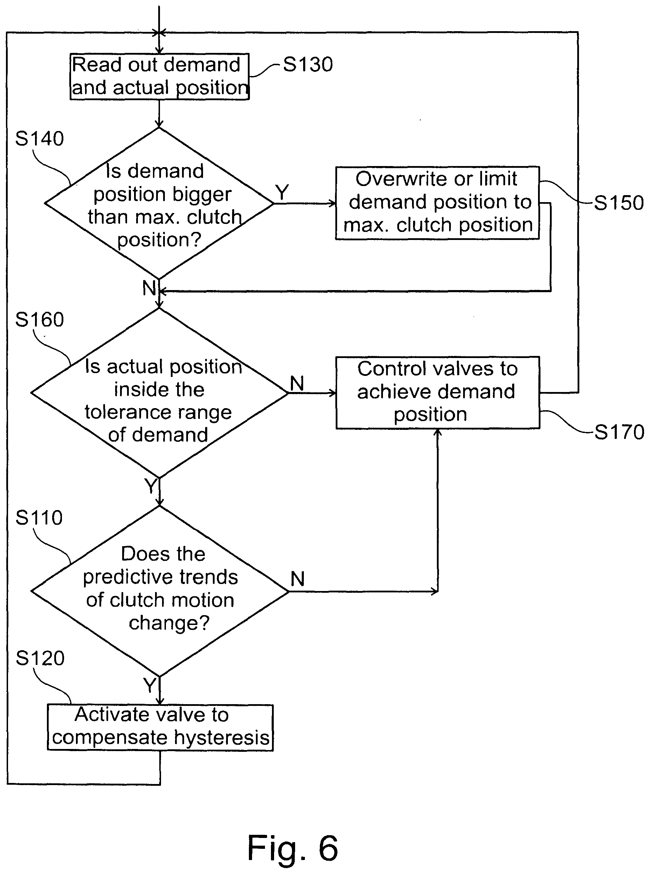

Fig. 6 depicts a possible flow diagram of a method including additional optional steps according to further embodiments of the present invention.

At step S130 the demand position and the actual position are obtained. For example, the demand position and the actual position can be received from respective controllers or can be measured at the clutch (actual position).

As next, it is decided at step S140 whether the demand position is greater than a maximum possible clutch position. If this is the case, at step S150 the demand position is overwritten or limited to the maximum clutch position. With this possibly newly defined demand position, at step S160, it is decided whether the actual position is inside a tolerance range of the demand position (see Fig. 5). If this is not the case, at step S170, the actuator(s) (for example valves) are activated to achieve that the actual position is within the tolerance range of the demand position.

If this is achieved, the method continues with step S130 from anew and waits until the actual position is outside the tolerance range in step S160. If this is the case, at step S110 it is predicted whether the engagement process will continue or whether a transition will be performed from the engagement to the disengagement process or vice-versa (i.e. whether the predictive trends of the clutch motion changes). If no such transition is expected or predicted, the actuators are again controlled correspondingly in step S170 to achieve the demand position and the method continues at step S130. However, if in step S110 a transition is predicted, the actuators are controlled respectively in order to compensate the hysteresis. After the compensation of the hysteresis, the method continues with step S130.

It is understood that not all steps shown in Fig. 6 need to be realized and in further embodiments only a subset of the steps are performed.

Advantageous aspects of the various embodiments can be summarized as follows:
The invention refers to clutches 10 that show a typical characteristic as depicted in Fig. 3. During disengagement, the actuator force F increases over the actuator position for a while. According to the characteristic of the spring implemented into the clutch mechanism the actuator force F reaches a maximal value and decreases slightly. During disengagement of the clutch 10, while the actuator stroke increases, the actuator force F follows the top characteristic curve depicted in Fig. 3. The bottom characteristic curve indicates the engagement process, when the actuator moves back to its initial position. The two curves shown in Fig. 3 depict the hysteresis loop over the actuator stroke. If the clutch disc is new, the touch point Xtp is reached at larger actuator positions X of the actuator force F characteristic curve. On the other hand, the wear on the disc leads to the motion of touch point Xtp into smaller actuator position values.

When moving from the working point 'A' from the top curve to the working point 'B' on the bottom curve the actuator position does not change. This is directly linked to the release of the bearing position. In a given motion direction, for example from working point 'A', one can only go on into the disengagement direction. If an engagement is required from point 'A', then first the working point 'B' has to be reached by a corresponding controlling. Next, the engagement process may be executed along the bottom curve that includes point 'B'.

In the operation range, where the actuator position is larger than the position that belongs to the touch point Xtp, the transferable torque T equals to zero (i.e. the clutch 10 is already disengaged). Further enlargement of the actuator position is unnecessary even if the demanded position further increases. While in this operation range the transferable torque T will not modify anymore (as it can be seen on Figure 4), a further increasing demand position value may be overwritten by a proper determined limit value in order to achieve less motion of the actuator and to enhance overall lifetime (see step S150 in Fig. 6). Arriving at working point 'C' can already ensure that no torque T will be transmitted by the clutch 10.

In the operation range of the disengaged clutch 10 the actuator position may be set nearly free to prepare a fast reaction on expected engaging command. If after disengagement an engaging process is predicted, than from point 'C' a faster and more accurate reaction may be executed. It is understood that Fig. 4 shows merely a simplified diagram of transferable torque T over the actuator position.

The disclosed hysteresis compensation may be beneficial even on the left side of the touch point Xtp, i.e. for partly engagement. A random working point 'D' inside the hysteresis loop of the whole linked system is available and provides a benefit, for instance, if the change of motion direction is predicted at partly engagement. In a given interval of the operation range the midpoint (or a small tolerance range around the midpoint between the two edge values on the hysteresis curves) can be the optimal working point for a target transferable torque T - even in the case if the prediction of the further motion is not fully reliable. For example, if the foregoing motion continuous it may involve some drawbacks, but if the motion changes the direction the new working point (after hysteresis compensation) brings benefits.

The transferable torque T can be estimated relatively accurate by measuring the position of the piston. If at a given position no torque T is transmitted by the clutch 10, the clutch 10 is fully disengaged. On the other hand, the maximal position of the piston is limited. Hence, a range starting at the known touch point Xtp of the clutch 10 is defined. As described before, the touch point Xtp splits the operation range of the actuator in two significant stroke intervals (or the piston). In the first interval the absolute value of the transferable torque T is nonzero, even at a very low value. In this case the clutch is (partly or full) engaged. In the second interval the transferable torque T equals to zero, which is the disengaged state.

If the piston reaches the predefined maximal position located in the disengaged range, the position of the piston may not be further increased - even if the demanded position of the clutch 10 indicates an even larger position. This limitation of the position may be set independently from the source of the demanded position as reference signal (see step S150 in Fig. 6).

If the clutch 10 is disengaged the transferable torque T does not change anymore, it is constantly zero - even if the actuator position is further increased. For instance, in the disengaged range of the operation field, if the demanded or limited maximal position is reached, the hysteresis of the actuator system may be compensated by controlling the actuator appropriately (step S120), e.g. by pulling the exhaust valve for a short given time. This step in the claimed method will be executed automatically by the control algorithm, for example, in response to corresponding commands transmitted from the clutch controller 50.

As for step S110, taking into consideration that the clutch demand mostly contains fast disengagement and fast or slow engagement, the trend of the demand position signal may be predicted as follows. For example, for a gearshift it is to be expected that both the engagement and disengagement may be carried out quickly. On the other hand, for the vehicle launch situation one can expect that the clutch engagement is performed slowly to ovoid an engine stalling. These expectation are independently of the source of the demanded clutch torque T or position, whether it is caused by the driver or a transmission control system.

Using this prediction the need of the hysteresis compensation can be determined. If the change in the motion direction is predicted (form a disengagement to engagement or vice-a-verse), the control unit activates the actuator. The time of valve activation may be determined off-line when the valve activation time is set up during system calibration. The time of valve activation may also be determined on-line, when the control algorithm includes a feedback control loop that receives the actual pressure signal measured in the working cylinder. Even a limited motion in the disengaged operation range of the piston is possible during the application of the inventive method.

The method is described to a large extend for a pneumatically operated clutch actuator device. However, further embodiments relate to different operation modes of an affected clutch actuator. The hysteresis effect between actuator degree of intervention and the transferable torque T of the vehicle clutch appears even in hydraulically or electromechanically operated clutches. These further different operation modes may involve interventions that deviate from the described actuation form (valve actuation). However, the way of how the control signal is obtained to compensate the hysteresis to reduce the reaction time of clutch operation is the same described herein.

The described method steps were illustrated in Fig. 6 as a possible execution sequence of the method as algorithm for an electronically controlled pneumatic clutch actuator. As described before, after reading out the signals of reference and of actual states, at step S130, the manipulation of the reference signal (demand position) will be checked, whether it is necessary or not. If the demand position is bigger than a predefined maximal clutch position value, the demand position (reference signal) may be saturated by this maximal clutch position value. The manipulation (step S150), i.e. the limitation of the reference signal, may be achieved in this case only in the disengaged range of operation. Until the measured (detected) actual position signal is not equal or is not inside a predefined tolerance range of the reference signal (demand position) the control logic has to execute appropriate actuator command to achieve the demand position (the loop of steps S160, S170, S130, S140).

If the demanded position is achieved, the trend of the further clutch motion is estimated (at step S110). This is virtually an expectation of how, especially in which direction, the demanded and following the actual clutch position will change in the future. If a change in the direction of the gradient of transferable torque T is predicted, an appropriate actuator control (activate control valves) is applied to arrive at a new working point on the hysteresis loop (step S120).

From this new working point a faster reaction is possible by the actuator control in case a difference between the demand and actual position will occur in the next control cycle, e.g. if a still state has to be left. If no change in the direction of the gradient of transferable torque T is predicted, the position control loop can control the system to remain in the still state (valves remain inactivated).

Further advantageous embodiments of the present invention relate to a method for controlling a clutch system of a vehicle electronically, where the degree of intervention of the actuator has a hysteresis over the transferable torque T which is characterized in that a predicted direction of transferable torque gradient is estimated and hysteresis compensation action is performed by the actuator accordingly.

Yet another embodiment is characterized in that said clutch actuator controls the transferable torque T according to external requests through assigned characteristics.

Yet another embodiment is characterized in that the predicted direction of transferable torque gradient is evaluated based on actual vehicle status and/or statuses of driver operators.

Yet another embodiment is characterized in that said hysteresis compensation action is performed by setting the degree of intervention of the actuator to a defined value ensuring the same transferable torque.

Yet another embodiment is characterized in that said defined value of the degree of intervention of the actuator achieved by said hysteresis compensation is evaluated according to optimize clutch operation in order to improve a dynamic performance and/or reduce an actuator load and/or increase control robustness and/or reduce an actuator stroke depending on an actual conditions of the clutch actuator and the vehicle.

The described methods may also be computer-implemented methods. A person of skill in the art would readily recognize that steps of various above-described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the a computer or processor or any kind of electronic control unit.

The description and drawings merely illustrate the principles of the disclosure. It will thus be appreciated that those skilled in the art will be able to devise various arrangements that, although not explicitly described or shown herein, embody the principles of the disclosure and are included within the scope of the claims.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure as long as they are covered within the scope of the claims.

### List of reference signs

- 10: clutch
- 20: transmission
- 30: engine
- 50: clutch control
- 105: input line
- Xtp: touch point
- F: actuator force
- X: displacement position

## Claims

1. A method for controlling a clutch (10), the clutch (10) comprising an actuator to control a transferable torque over a driveline system of a vehicle, the actuator being controllable to cause a disengagement process and an engagement process of the clutch (10) while passing a hysteresis, the method comprising:
predicting (S110) a transition from the disengagement process to the engagement process; and
compensating (S120) the hysteresis by controlling the actuator without performing the transition.

2. The method of claim 1, wherein the clutch (10) is configured to control the transferable torque (T) by controlling a displacement (X) of at least one clutch component and the actuator is configured to provide an actuator force (F) causing the displacement (X) of the at least one clutch component, wherein, if the displacement (X) exceeds a predetermined level (Xtp), the disengagement (X) is achieved and, if the displacement (X) is lower than the predetermined level (Xtp), the clutch (10) is at least partly engaged, wherein the step of compensating the hysteresis is performed by changing the actuator force (F) without passing the predetermined level (Xtp) in the displacement (X).

3. The method according to claim 2, wherein current values of the actuator force (F) and the displacement (X) define a current working point (A), and wherein the step of compensating the hysteresis includes the modification of the current working point (A), wherein the actuator is controlled such that in the modified working point (C): the time period to achieve the transition is shortened and/or an actuator load is reduced and/or an actuator stroke is reduced.

4. The method according to one of the preceding claims, further comprising controlling the actuator in accordance to an external request through an assigned characteristic.

5. The method according to one of the preceding claims, wherein the step of predicting a transition is carried out based on a vehicle status and/or statuses of driver operators.

6. The method according to claim 5, further comprising the steps of evaluating the vehicle status and/or evaluating the statuses of driver operators, wherein the evaluation is based on a current vehicle status and/or a previous vehicle status and/or current statuses of driver operators and/or previous statuses of driver operators, and
wherein the vehicle status includes at least one of the following: a moving vehicle during a gear shift, a parking vehicle, a starting vehicle, and wherein the statuses of the driver operators include at least one of the following: a position of a clutch pedal, a position of an acceleration pedal, a position of a breaking pedal, a position of a selector for an automatic transmission.

7. The method according to one of the preceding claims, wherein the step of compensating the hysteresis is carried out such that the transferrable torque (T) remains at a same level.

8. The method according to one of claims 2 to 7, wherein the clutch (10) is operated by changing an actual position of the at least one clutch component in response to a received demand position, wherein the actual position is controlled by the actuator and the demand position is provided by a driver or a control unit,
the method further comprising
reading (S130) the demand position and the actual position;
comparing (S140) the demand position with a maximum clutch position; and
if the demand position is greater than the maximum clutch position, limiting (S150) the demand position to the maximum clutch position.

9. The method according to claim 8, further comprising the steps:
if the demand position is smaller or equal to or has been limited to the maximum clutch position, comparing (S160) the actual position with a tolerance range of the demand position;
if the actual position is outside the tolerance range, controlling (S170) the valves of the actuator to modify the actual position and to achieve the demand position; and
returning to the step of reading (S130) the demand position and the actual position.

10. The method according to claim 9, wherein
if the actual position is inside the tolerance range, the steps of predicting (S110) the transition and compensating (S120) the hysteresis are carried out, the method further comprising the step of
returning to the step of reading (S130) the demand position and the actual position.

11. The method according to one of the preceding claims, wherein the step of predicting (S110) a transition includes further a prediction of a transition from the engagement process to the disengagement process.

12. A computer program having a program code for performing the method according to one of claims 1 to 11, when the computer program is executed on a processor.

13. A clutch controller (50) for a clutch (10) with an actuator to control a transferable torque (T) over a driveline system of a vehicle, the actuator being controllable to cause a disengagement process and an engagement process of the clutch (10) while passing a hysteresis, the clutch controller (50) comprising:
means for predicting a transition from the disengagement process to the engagement process; and
means for compensating the hysteresis by controlling the actuator without performing the transition.

14. The clutch controller (50) according to claim 13, wherein the means for compensating are configured to control the clutch (10) pneumatically or hydraulically or electromechanically.

15. A vehicle with a clutch (10) and a clutch controller (50) according to claim 13 or claim 14, wherein the clutch controller is further configured to perform, during operation, a method according to any one of claims 2 to 11.

## Patentansprüche

1. Verfahren zum Steuern einer Kupplung (10), die einen Steller zum Regeln eines übertragbaren Drehmoments über ein Antriebsstrangsystem eines Fahrzeugs umfasst, wobei der Steller zur Veranlassung eines Ausrückvorgangs und eines Einrückvorgangs der Kupplung (10) unter Passieren einer Hysterese steuerbar ist, wobei das Verfahren umfasst:
die Voraussage (S110) eines Übergangs vom Ausrückvorgang zum Einrückvorgang; und
das Kompensieren (S120) der Hysterese durch Steuern des Stellers ohne Ausführung des Übergangs.

2. Verfahren nach Anspruch 1, wobei die Kupplung (10) zum Regeln des übertragbaren Drehmoments (T) durch Steuern der Verlagerung (X) von wenigstens einem Kupplungsbauteil ausgelegt ist und der Steller zur Bereitstellung einer die Verlagerung (X) des wenigstens einen Kupplungsbauteils veranlassenden Stellkraft ausgelegt ist, wobei das Ausrücken (X) erfolgt, wenn die Verlagerung (X) ein vorgegebenes Niveau (Xtp) überschreitet, und die Kupplung (10) mindestens teilweise eingerückt wird, wenn die Verlagerung (X) das vorgegebene Niveau (Xtp) unterschreitet, wobei der Schritt des Kompensierens der Hysterese durch Ändern der Stellkraft (F) ohne Passieren des vorgegebenen Niveaus (Xtp) bei der Verlagerung (X) ausgeführt wird.

3. Verfahren nach Anspruch 2, wobei aktuelle Werte der Stellkraft (F) und der Verlagerung (X) einen aktuellen Arbeitspunkt (A) definieren, und wobei der Schritt des Kompensierens der Hysterese das Ändern des aktuellen Arbeitspunktes (A) beinhaltet, wobei der Steller so gesteuert wird, dass im geänderten Arbeitspunkt (C): die Zeitspanne zur Bewirkung des Übergangs verkürzt wird und/oder eine Stellerlast verringert wird und/oder ein Stellerhub verringert wird.

4. Verfahren nach einem der vorhergehenden Ansprüche, weiter umfassend das Steuern des Stellers gemäß einer externen Anforderung durch eine zugeordnete Kennlinie.

5. Verfahren nach einem der vorhergehenden Ansprüche, wobei der Schritt der Voraussage eines Übergangs auf der Basis eines Fahrzeugzustandes und/oder von Zuständen von Fahrer-Bedienern ausgeführt wird.

6. Verfahren nach Anspruch 5, weiter umfassend die Schritte der Auswertung des Fahrzeugzustandes und/oder der Auswertung der Zustände von Fahrer-Bedienern, wobei die Auswertung auf einem aktuellen Fahrzeugzustand und/oder einem früheren Fahrzeugzustand und/oder aktuellen Zuständen von Fahrer-Bedienern und/oder früheren Zuständen von Fahrer-Bedienern basiert, und
wobei der Fahrzeugzustand mindestens einen der folgenden Aspekte umfasst: ein fahrendes Fahrzeug während einer Gangschaltung, ein geparktes Fahrzeug, ein anfahrendes Fahrzeug, und wobei die Zustände der Fahrer-Bediener mindestens einen der folgenden Aspekte umfassen: eine Position eines Kupplungspedals, eine Position eines Gaspedals, eine Position eines Bremspedals, eine Position eines Wählhebels für ein Automatikgetriebe.

7. Verfahren nach einem der vorhergehenden Ansprüche, wobei der Schritt des Kompensierens der Hysterese so aufgeführt wird, dass das übertragbare Drehmoment (T) auf dem selben Niveau bleibt.

8. Verfahren nach einem der Ansprüche 2 bis 7, wobei die Kupplung (10) durch Ändern einer tatsächlichen Position des wenigstens einen Kupplungsbauteils auf Empfang einer Forderungsposition betätigt wird, wobei die tatsächliche Position vom Steller bestimmt wird und die Forderungsposition von einem Fahrer oder einer Steuereinheit bereitgestellt wird,
wobei das Verfahren weiter umfasst:
das Lesen (S130) der Forderungsposition und der tatsächlichen Position;
das Vergleichen (S140) der Forderungsposition wit einer maximalen Kupplungsposition; und
wenn die Forderungsposition die maximale Kupplungsposition überschreitet, die Begrenzung (S150) der Forderungsposition auf die maximale Kupplungsposition.

9. Verfahren nach Anspruch 8, weiter umfassend die folgenden Schritte:
wenn die Forderungsposition die maximale Kupplungsposition unterschreitet oder ihr gleich ist oder auf sie begrenzt wurde, das Vergleichen (S160) der tatsächlichen Position mit einem Toleranzbereich der Forderungsposition;
wenn die tatsächliche Position außerhalb des Toleranzbereichs liegt, das Steuern (S170) der Ventile des Stellers zum Ändern der tatsächlichen Position und zur Herstellung der Forderungsposition; und
die Rückkehr zum Schritt des Lesens (S130) der Forderungsposition und der tatsächlichen Position.

10. Verfahren nach Anspruch 9, wobei
wenn die tatsächliche Position innerhalb des Toleranzbereichs liegt, die Schritte der Voraussage (S110) des Übergangs und des Kompensierens der Hysterese (S120) ausgeführt werden, wobei das Verfahren weiter den folgenden Schritt umfasst:
die Rückkehr zum Schritt des Lesens (S130) der Forderungsposition und der tatsächlichen Position.

11. Verfahren nach einem der vorhergehenden Ansprüche, wobei der Schritt der Voraussage (S110) eines Übergangs weiter eine Voraussage eines Übergangs vom Einrückvorgang zum Ausrückvorgang beinhaltet.

12. Computerprogramm mit einem Programmcode zur Ausführung des Verfahrens nach einem der Ansprüche 1 bis 11, bei Ausführung des Computerprogramms auf einem Prozessor.

13. Kupplungssteuereinrichtung (50) für eine Kupplung (10) mit einem Steller zum Regeln eines übertragbaren Drehmoments über ein Antriebsstrangsystem eines Fahrzeugs umfasst, wobei der Steller zur Veranlassung eines Ausrückvorgangs und eines Einrückvorgangs der Kupplung (10) unter Passieren einer Hysterese steuerbar ist, wobei die Kupplungssteuereinrichtung (50) umfasst:
Mittel zur Voraussage eines Übergangs vom Ausrückvorgang zum Einrückvorgang; und
Mittel zum Kompensieren der Hysterese durch Steuern des Stellers ohne Ausführung des Übergangs.

14. Kupplungssteuereinrichtung (50) nach Anspruch 13, wobei das Mittel zum Kompensieren zur pneumatischen, hydraulischen oder elektromechanischen Steuerung der Kupplung (10) ausgelegt ist.

15. Fahrzeug mit einer Kupplung (10) und einer Kupplungssteuereinrichtung (50) nach Anspruch 13 oder 14, wobei die Kupplungssteuereinrichtung weiter zur Ausführung eines Verfahrens nach einem der Ansprüche 2 bis 11 während des Betriebs ausgelegt ist.

## Revendications

1. Procédé de commande d'un embrayage (10), l'embrayage (10) comprenant un actionneur pour commander un couple transférable sur un système de transmission d'un véhicule, l'actionneur pouvant être commandé pour provoquer une opération de débrayage et une opération d'embrayage de l'embrayage (10), tout en passant une hystérésis, le procédé comprenant :
prédire (S110) une transition d'une opération de débrayage à une opération d'embrayage ; et
compenser (S120) l'hystérésis en commandant l'actionneur sans effectuer la transition.

2. Procédé suivant la revendication 1, dans lequel l'embrayage (10) est configuré pour commander le couple (T) transférable en commandant un déplacement (X) d'au moins un élément de l'embrayage et l'actionneur est configuré pour fournir une force (F) d'actionneur provoquant le déplacement (X) du au moins un élément d'embrayage, dans lequel, si le déplacement (X) dépasse un niveau(Xtp) déterminé à l'avance, le débrayage (X) est achevé et, si le déplacement (X) est inférieur au niveau (Xtp) déterminé à l'avance, l'embrayage (10) est embrayé, au moins en partie, le stade de compensation de l'hystérésis étant effectué en changeant la force (F) de l'actionneur sans passer par le niveau (Xtp) déterminé à l'avance dans le déplacement (X).

3. Procédé suivant la revendication 2, dans lequel des valeur en cours de la force (F) de l'actionneur et du déplacement (X) définissent un point (A) de travail en cours, et dans lequel le stade de compensation de l'hystérésis comprend la modification du point (A) de travail en cours, l'actionneur étant commandé de manière à ce qu'au point (C) de travail modifié : la durée pour achever la transition soit écourtée et/ou qu'une charge de l'actionneur soit réduite et/ou une course de l'actionneur soit réduite.

4. Procédé suivant l'une des revendications précédentes, comprenant, en outre, commander l'actionneur en fonction d'une demande extérieure par une caractéristique affectée.

5. Procédé suivant l'une des revendications précédentes, dans lequel le stade de prédiction d'une transition est effectué sur la base d'un état du véhicule et/ou d'états de opérateurs d'entraînement.

6. Procédé suivant la revendication 5, comprenant, en outre, les stades d'évaluation de l'état du véhicule et/ou d'évaluation des états des opérateurs d'entraînement, l'évaluation reposant sur un état du véhicule en cours et/ou sur un état du véhicule précédent et/ou sur des états en cours de opérateurs d'entraînement et/ou des états précédents de opérateurs d'entraînement, et
dans lequel le statut du véhicule comprend au moins l'un de ce qui suit : un véhicule en déplacement pendant un changement de vitesse, un véhicule en stationnement, un véhicule en démarrage, et dans lequel les états des opérateurs d'entraînement comprennent au moins l'un de ce qui suit : une position d'une pédale d'embrayage, une position d'une pédale d'accélération, une position d'une pédale de frein, une position d'un sélecteur d'une transmission automatique.

7. Procédé suivant l'une des revendications précédentes, dans lequel le stade de compensation de l'hystérésis est effectué de manière à ce que le couple (T) transférable reste à un même niveau.

8. Procédé suivant l'une des revendications 2 à 7, dans lequel on fait fonctionner l'embrayage (10) en changeant une position en cours du au moins un élément de l'embrayage, en réaction à la réception d'une position demandée, la position en cours étant commandée par l'actionneur et la position demandée étant fournie par un conducteur ou par une unité de commande,
le procédé comprenant, en outre
lire (S130) la position demandée et la position en cours ; comparer (S140) la position demandée à la position maximum d'embrayage ; et
si la position demandée est plus grande que la position maximum d'embrayage, limiter (S150) la position demandée à la position maximum d'embrayage.

9. Procédé suivant la revendication 8, comprenant, en outre, les stades :
si la position demandée est inférieure ou égale ou a été limitée à la position maximum d'embrayage, comparer (S160) la position en cours à une plage de tolérance de la position demandée ;
si la position en cours est en dehors de la plage de tolérance, commander (S170) les soupapes de l'actionneur pour modifier la position en cours et pour atteindre la position demandée ; et
retourner au stade de lecture (S130) de la position demandée et de la position en cours.

10. Procédé suivant la revendication 9, dans lequel
si la position en cours est dans la plage de tolérance, on effectue les stades de prédiction (S110), de transition et de compensation (S120) de l'hystérésis, le procédé comprenant, en outre, le stade de
retourner au stade de lecture (S130) de la position demandée et de la position en cours.

11. Procédé suivant l'une des revendications précédentes, dans lequel le stade de prédiction (S110) d'une transition comprend, en outre, une prédiction d'un transition de l'opération d'embrayage à l'opération de débrayage.

12. Programme d'ordinateur ayant un code de programme pour effectuer le procédé suivant l'une des revendications 1 à 11, lorsque le programme d'ordinateur est exécuté sur un processeur.

13. Dispositif (50) de commande de l'embrayage (10) par un actionneur pour commander un couple (T) transférable sur un système de transmission d'un véhicule, l'actionneur pouvant être commandé pour provoquer une opération de débrayage et une opération d'embrayage de l'embrayage (10), tout en passant par une hystérésis, le dispositif (50) de commande de l'embrayage comprenant :
des moyens de prédiction d'une transition de l'opération de débrayage à l'opération d'embrayage ; et
des moyens de compensation de l'hystérésis en commandant l'actionneur sans effectuer la transition.

14. Dispositif (50) de commande de l'embrayage suivant la revendication 13, dans lequel les moyens de compensation sont configurés pour commander l'embrayage (10) pneumatiquement et hydrauliquement ou électromécaniquement.

15. Véhicule ayant un embrayage (10) et un dispositif (50) de commande d'embrayage suivant la revendication 13 ou la revendication 14, dans lequel le dispositif de commande d'embrayage est configuré, en outre, pour effectuer, pendant un fonctionnement, un procédé suivant l'une quelconque des revendications 2 à 11.
